# EUROPÄISCHE PATENTANMELDUNG

(11) **EP 1 112 808 A2**
(43) Veröffentlichungstag der Anmeldung: **04.07.2001**
(21) Anmeldenummer: 00811230.2
(22) Anmeldetag: 22.12.2000
(51) Int. Cl.: B23Q 11/00, B23B 51/06

(54) **Saugbohreranschluss**

(30) Priorität: 03.01.2000 DE 10000012
(71) Anmelder: HILTI Aktiengesellschaft, 9494 Schaan (LI)
(72) Erfinder: Kleine, Werner, 28832 Achim (DE); Bongers, Hans-Werner, 81477 München (DE)
(74) Vertreter: Wildi, Roland

(57) **Zusammenfassung**

Das Werkzeug (1) zum Bohren und/oder Meisseln ist einsetzbar in eine Handwerkzeugmaschine, die eine Absaugvorrichtung (10), mit einem das Werkzeug (1) umfassenden Gehäuse (11) aufweist. Das Werkzeug (1) weist einen rohrförmigen Schaft (2) auf, der einen axial verlaufenden Durchgangskanal (8) besitzt. An das dem bohrrichtungsseitigen Ende des Schaftes (2) gegenüberliegenden Ende schliesst sich ein mit dem Gehäuse (11) der Absaugvorrichtung (10) zusammenwirkendes Anschlussteil (3) an, dessen Umfangsfläche von einer Querbohrung (7) durchbrochen ist, welche eine Saugkammer (12) der Absaugvorrichtung (10) mit dem Durchgangskanal (8) verbindet. Das Anschlussteil (3) erzeugt eine Massenanreicherung die zu einer werkzeugschonenden Herabsetzung der auf das Werkzeug (1) einwirkenden Leistung führt.

## Beschreibung

Die Erfindung betrifft ein Werkzeug zum Meisseln und/oder Bohren mit einem rohrförmigen Schaft an den sich am einen Längsende ein Bohrkopf und am anderen Längsende ein Anschlussteil, mit einem Einsteckende anschliesst, wobei der Schaft einen axial verlaufenden Durchgangskanal aufweist, in den eine zum Umfang des Werkzeuges hin offene Querbohrung mündet und wobei der Schaft mittels Fügetechnik mit dem Anschlussteil verbunden ist.

Die Werkzeuge der genannten Art dienen der Bearbeitung von Gestein, Beton, Mauerwerk und dergleichen spröden Materialen. So sind beispielsweise Werkzeuge bekannt, bei denen das abgetragene Bohrklein mittels wenigstens einer am Schaft angeordneten wendelförmigen Abfuhrnut aus dem Bohrloch abtransportiert wird.

Darüber hinaus ist in der Vergangenheit eine weitere Art von Werkzeugen bekanntgeworden, sogenannte Saugbohrer, wie sie der DE 198 10 192 A1 entnehmbar sind. Diese bekannten Werkzeuge weisen einen Schaft mit einem axial verlaufenden Durchgangskanal auf. Bohrrichtungsseitig ist der Schaft mit einem Bohrkopf versehen und ist am Ende das dem Bohrkopf gegenüberliegt, mit einem Anschlussteil verbunden. Der Verbindung zwischen Schaft und Anschlussteil dienen bekannte Fügetechniken wie Löten, Kleben, Schweissen oder Schrumpfen.

Zum Abtransport des abgetragenen Bohrkleins dient eine Absaugvorrichtung, welche mit einem einer Unterdruck erzeugenden Vorrichtung verbindbar ist, beispielsweise einem Staubsauger. Zu diesem Zwecke ist das Werkzeug von einem Gehäuse der Absaugvorrichtung umgeben, in welches eine Querbohrung mündet, die mit dem axial verlaufenden Durchgangskanal verbunden ist.
Die in der genannten Weise aufgebauten Werkzeuge, bei welchen der Schaft mittels einer Fügetechnik mit dem Anschlussteil verbunden ist, ermöglichen eine kostengünstige Fertigung. Dieser fertigungstechnische Vorteil führt aber zu anwendungstechnischen Nachteilen. Es ist dabei zu beachten, dass solche Werkzeuge mittels eines entgegen der Bohrrichtung an das Anschlussteil anschliessenden Einsteckendes in Handwerkzeugmaschinen eingesetzt werden, welche dem Werkzeug nebst einer Drehbewegung eine Schlagbewegung erteilen. Insbesondere aufgrund dieser Schlagbewegung kommt es dazu, dass beim Einsatz solcher Werkzeuge in Handwerkzeugmaschinen von grösserer Leistung vor allem im Uebergangsbereich zwischen Schaft und Anschlussteil Brüche entstehen. Diese Gefahr ist bei Werkzeugen von kleinerem Durchmesser am grössten, da solchen Werkzeugen beim Einsatz in Handwerkzeugmaschinen grösserer Leistung aufgrund der Schlagbewegung übermässig Energie zugeführt wird. Die auftretenden Brüche führen zu einem vorzeitigen Ausfall des Werkzeuges, welcher lange vor der verschleissbedingten Unbrauchbarkeit eintritt.

Der Erfindung liegt demnach die Aufgabe zugrunde, den in Rede stehenden Werkzeugen unter Berücksichtigung der wirtschaftlichen Herstellung eine derartige Dimensionierung zu verleihen, dass Brüche nicht auftreten und somit ein vorzeitiger Ausfall vermieden werden kann.

Erfindungsgemäss wird die Aufgabe dadurch gelöst, dass die grösste Querschnittsfläche des Anschlussteiles mindestens etwa dem 2,5-fachen der grössten Querschnittsfläche des Einsteckendes entspricht.

Ausgehend von der Eigenschaft, dass die Dimensionierung der Einsteckenden von Werkzeugen in Abhängigkeit von der Leistung der zum Einsatz gelangenden Handwerkzeugmaschinen erfolgt, macht sich die erfindungsgemässe Dimensionierung die Erkenntnis zunutze, dass eine Massenanreicherung vor allem im Nahbereich des Einsteckendes zu einer gewissen Absorption von Schlagenergie führt. Somit wird Dank der erfindungsgemässen Dimensionierung jeweils so viel Schlagenergie absobiert, dass, hervorgerufen durch die unterschiedlichen Massenverhältnisse von Schaft und Anschlussteil, im Uebergangsbereich dieser Teile keine Brüche mehr auftreten.

Es hat sich gezeigt, dass - bezogen auf das Vermeiden von Brüchen - eine vorteilhafte Dimensionierung dann erreicht wird, wenn zweckmässigerweise die grösste Querschnittsfläche des Anschlussteiles etwa dem 4-fachen der grössten Querschnittsfläche des Einsteckendes entspricht.

Besonders gross ist die Gefahr des Auftretens von Brüchen bei Werkzeugen mit kleineren Durchmesser, da in diesen Fällen der Massenunterschied zwischen Schaft und Anschlussteil besonders ins Gewicht fällt. Weil gerade bei diesen Werkzeugen wenig Schlagenergie erforderlich ist, macht sich die zur Absorption führende Massenanreicherung im Nahbereich des Einsteckendes besonders bemerkbar. Um eine diesbezügliche Dimensionierung zu gewährleisten, entspricht vorzugsweise der Durchmesser des Anschlussteiles mindestens dem Durchmesser des Bohrkopfes. Zur Erzielung dieser Voraussetzung sind verschiedene Ausgestaltungen möglich. So kann beispielsweise der Schaft bis zum Anschlussteil hin gegenüber letzteren einen geringeren Durchmesser aufweisen. Für Werkzeuge mit grösserem Durchmesser besteht aber auch die Möglichkeit, dem Schaft einen Durchmesser zu verleihen, der demjenigen des Anschlussteils entspricht. In einem solchen Falle trägt die Masse des Schaftes zur Massenanreicherung im Nahbereich des Einsteckendes bei, sodass die Masse des Anschlussteiles eine Reduktion erfahren kann.

Bei einem ausreichend gross dimensionierten Anschlussteil bietet es sich an sich an, dass zweckmässigerweise die Querbohrung in diesem angeordnet ist und so eine Verbindung zwischen Durchgangskanal und dem vom Gehäuse der Absaugvorrichtung umgebenden Umfang des Anschlussteiles schafft.

Trägt jedoch der Schaft zur Massenanreicherung im Nahbereich des Einsteckendes bei und weist einen Durchmesser auf, der dem Anschlussteil entspricht oder diesem nahezu gleich kommt, bietet es sich weiter an, die Querbohrung zweckmässigerweise im rückwärtigen Bereich des Schaftes anzuordnen. Das Anschlussteil kann dadurch axial sehr kurz, kostengünstig und materialsparend hergestellt werden.

Um sicherzustellen, dass das abgebaute Bohrklein sicher abgeführt wird, ist eine ausreichend grosse Dimensionierung von Durchgangskanal und Querbohrung Voraussetzung. Besonders vorteilhaft wirkt es sich aus, wenn die Querschnitte von Durchgangskanal und Querbohrung gleich sind. Um die Abfuhr des Bohrkleins auch strömungstechnisch zu optimieren, ist vorteilhafterweise zumindest ein Teil der Querbohrung gegenüber der Achse des Anschlussteiles um etwa 30 bis 70° geneigt.

Beträgt die Neigung zumindest eines Teiles der Querbohrung gegenüber der Achse des Anschlussteiles etwa 45°, werden nebst den strömungstechnischen Vorteilen zusätzlich noch herstellungstechnische Vorteile erreicht. So lässt sich eine Neigung von 45° bei den herstellungsseitig benötigten Vorrichtungen einfach verwirklichen. Dies unabhängig davon, ob sich die Querbohrung im Anschlussteil oder im rückwärtigen Bereich des Schaftes befindet.

Wie bereits aus dem Stand der Technik bekannt, lassen sich zur Verbindung von Schaft und Anschlussteil übliche Fügetechniken anwenden. Um die Verbindungsstelle zwischen Schaft und Anschlussteil unter Anwendung solcher bekannter Fügetechniken weiter zu verbessern, ist auch eine geeignete und vor allem wirtschaftliche geometrische Auslegung der Teile in Betracht zu ziehen. Diesen Anforderungen wird Genüge getan, wenn zweckmässigerweise das Anschlussteil einen der Verbindung mit dem Schaft dienenden Zapfen aufweist, wobei der Aussendurchmesser dieses Zapfens dem Innendurchmesser des Durchgangskanals entspricht. Es wird damit die aufgrund des Durchgangskanals ohnehin schon vorhandene Innenkontur des Schaftes zur Vergrösserung der Fügefläche benutzt. Das Gegenstück dieser Fügefläche bildet der Zapfen, welcher an dem dem Einsteckende gegenüberliegenden Stirnende des Anschlussteiles angeordnet ist. Diese Lösung bietet sich vor allem an, wenn das Anschlussteil axial relativ kurz ausgebildet ist und sich die Querbohrung im rückwärtigen Bereich des Schaftes befindet.

Die Erfindung wird nachstehend anhand von Zeichnungen, welche Ausführungsbeispiele wiedergeben näher erläutert. Es zeigen:
- Fig. 1: ein erfindungsgemässes Werkzeug mit einer Absaugvorrichtung teilweise im Schnitt
- Fig. 2: eine weitere Ausführungsform eines Teils eines erfindungsgemässen Werkzeuges mit einer Absaugvorrichtung teilweise im Schnitt

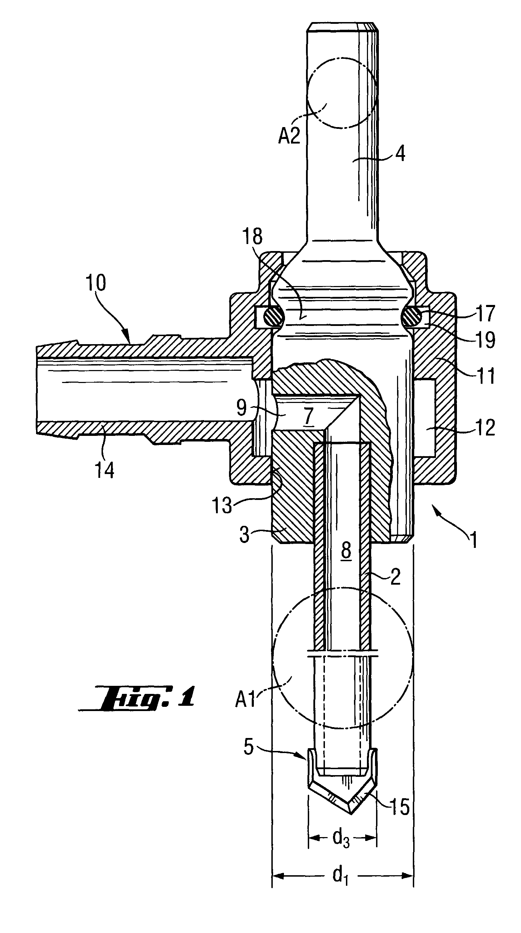

Die Fig. 1 zeigt ein insgesamt mit 1 bezeichnetes Werkzeug, bestehend aus einem rohrförmigen Schaft 2, einem Anschlussteil 3 und einem Einsteckende 4. Das Werkzeug 1 wird im Bereich des Anschlussteils 3 von einer insgesamt mit 10 bezeichneten Absaugvorrichtung umfasst. Das Anschlussteil 3 weist einen Durchmesser d1 bzw. eine Querschnittsfläche A1 und das Einsteckende 4 eine Querschnittsfläche A2 auf.

Der rohrförmige Schaft 2 besitzt einen axial verlaufenden Durchgangskanal 8, weist an einem Ende einen Bohrkopf 5 mit dem Durchmesser d3 auf und ist am gegenüberliegenden Ende mit dem Anschlussteil 3 verbunden. Das Einsteckende 4 dient dem Anschluss an eine, zeichnerisch nicht dargestellte, Handwerkzeugmaschine. Das Anschlussteil 3 besitzt eine Querbohrung 7, die in den Durchgangskanal 8 des Schaftes 2 mündet und eine Öffnung 9 an der Umfangsfläche des Anschlussteils 3 aufweist.

Die Absaugvorrichtung 10 besitzt ein Gehäuse 11, welches das Anschlussteil 3 an seinem Umfang entlang völlig und entlang der Längsachse grösstenteils umfasst. Das Gehäuse 11 bildet mit der vom Gehäuse 11 umfassten Umfangsfläche des Anschlussteils 3 eine Saugkammer 12, in die sich die Mündungsöffnung 9 der Querbohrung 7 erstreckt. Die Umfangsfläche des Anschlussteils 3 und Kontaktflächen 13 des Gehäuses 11 der Absaugvorrichtung 10 wirken abdichtend. Ein am Gehäuse 11 angeordneter Ansaugstutzen 14, mündet in die Saugkammer 12.

Im an das Einsteckende 4 grenzenden Bereich ist ein, den Aussenumfang des Anschlussteils 3 zweckmässigerweise teilweise umfassender, O-Ring 17, in einer Ausnehmung 18, angeordnet. Die Ausnehmung 18 erstreckt sich über den gesamten Umfang des Anschlussteils 3 und ist derart ausgebildet, dass ein Teil des O-Rings 17 die Umfangsfläche des Anschlussteils 3 radial überragt. Im Gehäuse 11 ist eine Nut 19 angebracht, sodass der auf dem Anschlussteils 3 angeordnete O-Ring 17 in die Nut 19 bringbar ist. Somit liegt eine lösbare Verbindung zwischen dem Gehäuse 11 der Absaugvorrichtung 10 und dem Anschlussteil 3 vor.

Der an einem Ende des Schafts 2 angeordnete Bohrkopf 5 weist beispielsweise eine Schneideplatte 15 auf, die aus Hartmetall besteht. Der Bohrkopf 5 ist mit dem freien Vorderende des rohrförmigen Schaft 2 beispielsweise durch Schweissen oder Löten verbunden.

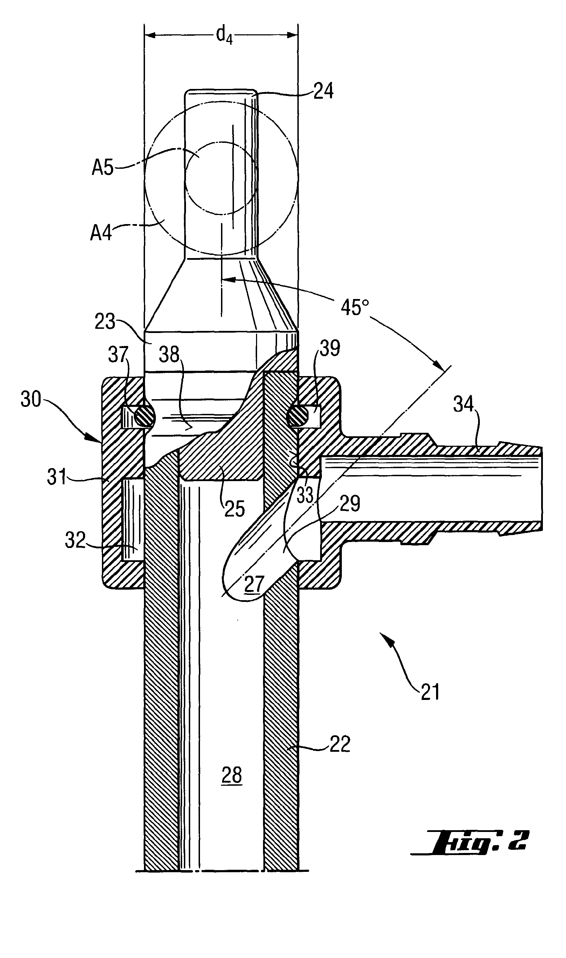

Die Fig. 2 zeigt eine weitere erfindungsgemässe Ausführungsform, eines insgesamt mit 21 bezeichneten Werkzeuges, bestehend aus einem rohrförmigen Schaft 22, einem Anschlussteil 23 und einem Einsteckende 24, wobei der Durchmesser des Schaftes 22 dem Durchmesser des Anschlussteils 23 entspricht.
Das Werkzeug 21 wird im Bereich des Anschlussteils 23 von einer insgesamt mit 30 bezeichneten Absaugvorrichtung umfasst. Das Anschlussteil 23 weist einen Durchmesser d4 bzw. eine Querschnittsfläche A4 und das Einsteckende 24 eine Querschnittsfläche A5 auf.

Der rohrförmige Schaft 22 besitzt einen axial verlaufenden Durchgangskanal 28 und ist an einem Ende mit dem Anschlussteil 23 verbunden. Das Einsteckende 24 dient dem Anschluss an eine, zeichnerisch nicht dargestellte, Handwerkzeugmaschine. Der Schaft 22 besitzt eine Querbohrung 27, die in den Durchgangskanal 28 des Schaftes 22 mündet und eine Öffnung 29 an der Umfangsfläche des Schaftes 22 aufweist.

Die Absaugvorrichtung 30 besitzt ein Gehäuse 31, welches das Anschlussteil 23 an seinem Umfang entlang völlig und entlang der Längsachse teilweise umfasst. Das Gehäuse 31 bildet mit der vom Gehäuse 31 umfassten Umfangsfläche des Schaftes 22 eine Saugkammer 32, in die sich die Mündungsöffnung 29 der Querbohrung 27 erstreckt. Die Umfangsfläche des Schaftes 22 und Kontaktflächen 33 des Gehäuses 31 der Absaugvorrichtung 30 wirken abdichtend. Ein am Gehäuse 31 angeordneter Ansaugstutzen 34, mündet in die Saugkammer 32.

Im an das Einsteckende 24 grenzenden Bereich ist ein, den Aussenumfang des Anschlussteils 23 zweckmässigerweise teilweise umfassender, O-Ring 37, in einer Ausnehmung 38, angeordnet. Die Ausnehmung 38 erstreckt sich über den gesamten Umfang des Schaftes 22 und ist derart ausgebildet, dass ein Teil des O-Rings 37 die Umfangsfläche Schaftes 22 radial überragt. Im Gehäuse 31 ist eine Nut 39 angebracht, sodass der auf dem Schaft 22 angeordnete O-Ring 37 in die Nut 39 bringbar ist. Somit liegt eine lösbare Verbindung zwischen dem Gehäuse 31 der Absaugvorrichtung 30 und dem Schaft 22 vor.

Das Anschlussteil 22 weist ferner einen Zapfen 25 auf, dessen Aussendurchmesser dem Durchmesser des Durchgangskanals 28 entspricht. Mittels an sich bekannter Fügetechniken, wie beispielsweise Schweissen, Löten oder Kleben, ist der in den Durchgangskanal 28 hineinragende Zapfen 25 mit dem Schaft 22 verbunden.

Die im Schaft 22 angeordnete Querbohrung 27 weist eine Neigung von etwa 45° gegenüber der Achse des Anschlussteils 23 auf.

## Patentansprüche

1. Werkzeug (1,21) zum Meisseln und/oder Bohren mit einem rohrförmigen Schaft (2,22) an den sich am einen Längsende ein Bohrkopf (5) und am anderen Längsende ein Anschlussteil (1,21), mit einem Einsteckende (4,24) anschliesst, wobei der Schaft (2,22) einen axial verlaufenden Durchgangskanal (8,28) aufweist, in den eine zum Umfang des Werkzeuges (3,23) hin offene Querbohrung (7,27) mündet und wobei der Schaft (2,22) mittels Fügetechnik mit dem Anschlussteil (3,23) verbunden ist, **dadurch gekennzeichnet, dass** die grösste Querschnittsfläche (A1,A4) des Anschlussteils (3,23) mindestens etwa dem 2,5-fachen der grössten Querschnittsfläche (A2,A5) des Einsteckendes (4,24) entspricht.

2. Werkzeug nach Anspruch 1, dadurch gekennzeichnet, dass, die grösste Querschnittsfläche (A1,A4) des Anschlussteils (3,23) etwa dem 4-fachen der grössten Querschnittsfläche (A2,A5) des Einsteckendes (24) entspricht.

3. Werkzeug nach einem der Ansprüche 1 oder 2, dadurch gekennzeichnet, dass der Durchmesser (d1,d4) des Anschlussteils (3,23) mindestens dem Durchmesser (d3) des Bohrkopfes (5) entspricht.

4. Werkzeug nach einem der Ansprüche 1 bis 3, dadurch gekennzeichnet, dass die Querbohrung (7) im Anschlussteil (3) angeordnet ist.

5. Werkzeug nach einem der Ansprüche 1 bis 3, dadurch gekennzeichnet, dass die Querbohrung (27) im Schaft (22) angeordnet ist.

6. Werkzeug nach einem der Ansprüche 1 bis 5, dadurch gekennzeichnet, dass zumindest ein Teil der Querbohrung (27) gegenüber der Achse des Anschlussteils (23) eine Neigung von 30 bis 70° aufweist.

7. Werkzeug nach Anspruch 6 dadurch gekennzeichnet, dass zumindest ein Teil der Querbohrung (27) gegenüber der Achse des Anschlussteils (23) eine Neigung von 45° aufweist.

8. Werkzeug nach einem der Ansprüche 5 bis 7, dadurch gekennzeichnet, dass das Anschlussteil (23) einen zur Verbindung mit dem Schaft (22) dienenden Zapfen (25) mit dem Durchmesser des Durchgangskanals (28) aufweist.
